# EUROPEAN PATENT SPECIFICATION

(11) **EP 2 351 479 B1**
(45) Date of publication and mention of the grant of the patent: **13.04.2016**
(21) Application number: 09824410.6
(22) Date of filing: 05.11.2009
(51) Int. Cl.: A01G 9/12, E04H 1/04, E04H 1/06

(54) **THREE-DIMENSIONAL PLANTING CONSTRUCTION**
DREIDIMENSIONALE ANPFLANZUNGSKONSTRUKTION
CONSTRUCTION TRIDIMENSIONNELLE POUR PLANTATION

(30) Priority: 06.11.2008 CN 200810172654
(43) Date of publication of application: 03.08.2011
(73) Proprietor: Huangshi City Guyue Fengta Woodworking Co., Ltd., Hubei 435000 (CN)
(72) Inventor: HU, Xiangyu, Huangshi Hubei 435000 (CN)
(74) Representative: Gulde & Partner
(86) International application number: PCT/CN2009/074797
(87) International publication number: WO 2010/051755

(56) References cited:
- WO-A1-02/20918
- CN-A- 1 391 792
- CN-Y- 201 075 919
- CN-Y- 201 100 004
- CN-Y- 201 100 004
- DE-A1- 4 321 935
- JP-A- 8 242 698
- JP-A- 11 046 584
- JP-A- 2001 145 425
- US-A1- 2006 150 531

## Description

### Technological Field

This invention involves a three-dimensional planting for a construction and the necessary multi-purpose utilization of water, soil and wind power generation. It covers constructional reinforced concrete, wood structure, water supply and drainage, wind power generation, and mechanical drive.

### Background technology

Cities around the world are constantly increasing both in numbers and in size, whereas urban vegetation, though areas rising or falling according to each specific circumstances, fails to catch up with the development and expansion of cities. In developing and building, at least two thirds of the original vegetation of an area has to be destroyed. The plants put in later on for afforesting after the buildings have been erected cover at most one third of the total original area for development. In addition, there are various emissions of greenhouse gases, waste gases from factories and motor vehicles. Regions bordering deserts are often threatened by pollution from sand storms. The rising of earth's temperature has posed threats and challenges to human beings. The state of arts solution to afforesting is generally based on the ground, utilizing the characteristics of various plants to expand the vertical and horizontal areas of vegetation; other solutions include making use of balconies and rooftop areas of high-rise buildings, spare areas beside cloverleaf junctions, and isolation belts on expressways. All the above measures, however, lag far behind the pace of air pollution and vegetation reduction and destruction brought about by urban development and expansion. CN 2010 75919 discloses a building plate frame with three-dimensional afforesting property, belonging to the garden environment-protective technical field, which is composed of a building frame. The building plate frame is characterized in that a protecting layer is arranged around the support poles of the building frame, a culture soil layer is stuffed between the support poles and the protecting layer, the root of woody plant is arranged in the culture soil layer, while branch is through the protecting layer and exposed in air to form an annular plant frame, and a water supply fertilizer device is arranged on the building frame.

### The contents of this invention

This invention contains a full set of production procedure of a three dimensional framework for water and soil conservation and for plants to grow, and the measures and conditions for the necessary water, soil, electricity and mechanical drive. It can provide green shade, fresh air and oxygen to various houses, buildings and locales; in summer, it can lower the room temperature and reduce the using time of air-conditioning, decreasing the emission of greenhouse gases; also is it capable of absorbing toxic gases and treating environmental pollutions. The three dimensional framework is made of reinforced concrete and wood, which are so constructed into a high-rising vertical structure that it can hold water and soil to form a basis for plants to grow, survive and cling, and provide measures and conditions for human plant-growing and maintenance. Therefore, a three dimensional vegetation can be planted at all stories of a building, from the bottom to the top, and out of which we can get access to green vegetation, flowers, green shades, direct sunlight or prescribed illumination. It is a comprehensive technological solution for treating desertification and sandstorm pollution.
I. In order to make it possible for plants to live and grow around various buildings, houses and locales (these will be referred to as background below.) and achieve a three dimensional vegetation whereas keeping the cost of construction and maintenance as low as possible, four types of cubic structures are employed in which wood turnover shutters are used for adjusting the rotation angle of the vegetation, providing either green shade, sunlight or ventilation. The following is a specific example of the technical solution:
   1) coupling structure, 2) dual-row single body structure, 3) single-row single body trapezoid helix structure, 4) single-row single body structure (a horizontal plan view), 5) vegetation turnover shutter adjusting angle
II. Three types of technical solutions for the supply and drainage of the water necessary for plants to grow and their match with soil and sands.
   1) The water that is used by the residents and is not heavily contaminated (apart from toilet flush water and toxic waste water) can be introduced into the water and soil troughs through water conduits constructed along the building for the plants to absorb for growth. 2) Water can be pumped into vertical water towers in upright posts of the framework and water troughs in horizontal beams of the framework for the plants to absorb for growth. 3) In order to ensure a healthy growth of the plants, redundant water must be drained off, so that a water recycling drainage structure is designed to maintain the proper humidity of the soil.
III. The technical solutions to meet the requirements of water and soil supply, maintenance and conservation, so that it is possible for various types of locales to plant three dimensional vegetation.
   1) Electric power can be supplied either by wind power generating sets or by the power grid for pumping water, operating an overhead trolley and lighting. 2) The upright posts of the three dimensional framework can also be employed to serve as the tower structure of the wind power generating sets.
IV. The technical solution to operate an overhead trolley by electric power for transporting soil and plants up and down and for plants growing, manicuring, maintenance and facility installation.

To take high-rise residence or office building for example: to the east, south and west (corresponding respectively to the direction of sun rising up, climbing to the top and setting down in relation to the earth), at a certain distance in parallel with the building, the upright posts of the framework are to be built from the pile foundation, the horizontal beam seating the water and soil trough (WSB) is installed on the upright posts 4-5 meters above the ground to hold water and soil for cultivating plants, and the horizontal beam seating vertical water trough (VWB) is connected to the structure of the building. The VWB is connected to the drainage pipe of the residence, and waste water flows through VWB down to the trough of WSB, which is divided into two layers inside with a horizontal isolation plate to separate soil and water. The upper is soil and the lower is water. The trough section of the WSB is V-shaped. The isolation plates are installed piece by piece, and there is a gap between them and the WSB. Moreover, there are vertical isolation plates under the horizontal isolation plates for water recycling, each extending one third of the total distance from both WSB ends to the center. On both sides of the upright posts are vertical plates for blockading water and soil. The water flows over from the VWB between upright posts and enters the water and soil trough through the water inlet hole under the blockading plates. At the water inlet are sands of 3 to 5 mm in diameter, and at the middle part and the outlet are sands of 0.5 to 1.5 mm in diameter. When the water level approaches the horizontal isolation plate, extra water will flow out from the water outlet under the blockading plate at the other end.

At 1.2 to 1.3 meters above the WSB is the horizontal beam for carrying turnover shutters (TSB), on the section of which two to six pairs of ox-horn shaped radial claw stop are installed onto the beam to withhold the axis of the turnover shutters. The external surface of the TSB is tangent to the external surface of the axis of the turnover shutter, so that by pulling the rope inside or outside the turnover shutter, it can be revolved up and down. The upper edge of the turnover shutter can turn downside towards the inner side of the upright post by 120° to 130°, allowing for green shade, direct sunlight or illumination as required; the axis of the turnover shutter is a round fir log of 180 to 200 mm in diameter, at regular distances along the length of the axis, holes are drilled on the axis to be inserted with small round fir logs of 50 to 60 mm in diameter, then square logs with holes drilled on them are attached onto the ends of those small round fir logs to create a network; two fiber ropes are fastened respectively to the upper and lower edges of the turnover shutter, starting from the top or next to top floor down to the lower floor to connect the turnover shutters there, and so on and so forth, until they reach the ground. The angle of the turnover shutters can thus be adjusted by pulling either of the inside rope and the outside rope from the ground.

Plants selected can be grown in the soil in the troughs on the WSB, vines are usually cultivated in the troughs on both sides of the upright posts, and small trees (or varieties), shrubs and herbs are usually cultivated in the middle, to be grafted onto stocks; the types of plants to be grown should, first of all, be decided according to the conditions and functions of the three dimensional framework to meet the requirements of adjusting green shade and illumination with vegetation, and secondly according to the adaptability of those plants to the climate, water and soil of each region.

Vines tend to climb up and cling to other objects around them. We need to pull the vines onto the turnover shutters over the WSB manually, and separate the vines entwined onto the upright posts from those onto the turnover shutters, so that they will not hinder the rotation of the turnover shutters; new-born vine branches need to be tied onto the network of the turnover shutters with thin ropes

The installation and maintenance of the facilities for cultivating, preserving and taking care of the whole three-dimensional vegetation requires manual work and management, which falls into the category of aerial work. In order to guarantee the safety of workers, lessen the intensity of labor, improve the work efficiency and increase the utility of the vegetation, an overhead trolley powered by electricity is to be mounted under the horizontal beam on the top of the framework. With different types of framework structures, the sliding rail of the trolley can either take the form of a straight line or that of a curve where a straight line crosses an arc line, which allows the trolley wheel to move horizontally, left and right, or in an arc along the rail and to be able to reach every grid of the three-dimensional vegetation. The height of the upper-most storey is around 5 to 7 meters. A suspended basket is hoisted up to the footboard at the inner side of the WSB, fasten the security rope around the TSB, and fasten the security belt on the operator onto the rope. Thereby he can start working in absolute safety.

The overhead trolley is powered either with a DC or an AC motor, on which a system of pulleys are driven through the force upon the pulley axis to move horizontally left or right along the flange of the rail. Under the pulley supporting frame is a DC or AC motor, which drives the rotating shaft hoist winch to wind steel rope for lifting and dropping suspended basket, with the lift weight less than one ton.

When the foot of high rise buildings are large supermarkets, department stores, clubs, theatres, or with buildings like large stadiums, refineries, power stations (with chimneys), a straight-lined or curved dual-row single body structure (curved here means the unequal angled curve formed by the oscillating angle on the horizontal plane) which is detached from the main body structure can be built to the east, south and west of the house, the inner row of upright posts and horizontal beams are 4 to 8 meters away in parallel with the main body, and the outer row of upright posts will be built in connection with them. The distance between the two rows of upright posts varies according to the height of the structure. Some upright posts in the framework are enlarged in diameter to become hallow posts for storing water, and they are intersected horizontally at regular intervals of every 3 to 5 stories of vegetation frame height, on each section of which water inlet pipes are installed at the top, air ventilation holes are drilled, and water outlet pipes are installed at the foot. The number of water storage upright posts is decided by the vegetation area.

Along the inner side of the dual-row single body framework which is higher than the background house, the grids are also required to be installed with turnover shutters of vegetation. Under this part, a layer of WSB is built every other store, where only shrubs and herbal plants are grown, and vines will not be planted, in order to achieve better lighting and ventilation. The distance from the ground to the first layer of WSB is around 6 to 8 meters, thus it will not interfere with transportation or other daily activities. Water outlet pipe is installed at every water inlet on the upper hole of WSB of each floor. Electro-magnetic valves are used to control the supply of water to upper stories of the house from the ground; water pumps are used to suck water.

Raising water with pump is already a mature technology; its application depends on specific circumstances. For reference, we can consult the book "The Design and Computation of Water Pump and Pumping Station", first published and issued by the Chemical Industry Press in January 2007 in Beijing.

In areas where there is rather abundant resource of wind energy, the advanced technology of wind power generation can be adopted: the upright posts or posts for water storage of the framework can be used as the tower housing the wind power generating set. If the upright posts are built 3 to 5 meters higher, upon which a steel structure tower is installed to house the wind power generating set, the cost for building a tower of wind power generating set of the same size will be reduced by about 80 percent, and it will be much more convenient and less costly to maintain and repair the wind power generating set. In addition, there are other advantages in installing small size wind power generating sets only: lower noise pollution---even less than that of cars, stereos and construction machinery; small wind power generating sets can produce electricity any time when the wind velocity is at 3 m/s; the requirement for the time period of power consumption is not strict in this case, and moreover, extra electricity can be stored with energy storage technology to adjust the energy consumption distribution.

The manufacturers of wind power generating sets can guarantee to provide comprehensive services of field surveying, designing, manufacturing, installation and operation of their equipment, which include the Xinjiang Goldwind Science and Technology Co., ltd., Shanghai Shenxin Wind Power Generating Equipments Co., Ltd. For reference, please consult "A Technological Manual for Wind Power Station Engineering", published by the Machinery Industry Press in March 2004.

The above is an explanation of what is in common and what is different between the dual-row single body structure and the coupling structure, and the method of maintenance and operation of other structures is the same as that of the coupling structure.

For buildings like wharfs, railway stations, flyovers, factories, auditoriums, squares and so on, where there are houses as well as long distance buildings and large open area of land, what they have in common is that the background builds are not very tall, and we usually adopt a single-row single body trapezoid helix structure, including a straight line helix and an oscillation angle helix curve structure. Upright posts of the framework are installed to the east, south and west, the height of which should not exceed 40 meters, and no overhead trolleys are needed. Workers can climb up the framework by ladders, but security equipments must be carried along during work.

When the background buildings and venues are flyovers, auditoriums or squares, turnover shutters of vegetation may not be installed onto the framework to control the budget, the labor cost and the expense of maintenance. Instead, the top horizontal beams of the framework can be connected and turned into continuous water troughs to keep water, and water outlet pipes can be installed onto the bottom of the water troughs to supply water, and water can be raised with pumps. Where there is no power supply and the demand for water is high, wind power generating sets can be installed to provide electricity. The upright posts can be built higher and larger in diameter to serve either as a water storage tower or as the tower for housing the wind power generating sets.

The above is an explanation for what is in common and what is different between a single-row single body trapezoid helix structure and the other two types of structures mentioned before. As to the turnover shutters of vegetation, their maintenance and operation, it is the same as that of the previous two types.

In areas on both sides of expressways and railways, squares, highways and factories, where the background is very low, the single row single body structure can be adopted, with the framework taking the form of either a straight or curve line, facing east, south and west, being less than 20 meters in height. No overhead trolley is required, and workers can climb up and down with ladders, carrying safety facilities with them. Water can be raised with pump. The top horizontal beam of the framework can be converted into water troughs to keep water, and water outlet pipes are mounted on the bottom of the troughs. Turnover shutters of vegetation may not be needed, but can be installed in certain parts when necessary.

The above is an explanation for what is in common and what is different between a single row single body structure and the other three types of structures mentioned before. As to the vegetation, maintenance and methods of operation, it is the same as that of the previous three types.

All the above mentioned frameworks are 5 to 10 meters higher than the background house and other buildings.

To treat desertification and sandstorm pollution, an integrated three dimensional structure is adopted to build the framework.

The wind eroded land such as the Gobi and the desert land neighboring the outskirt of the oasis is the major area that threatens the oasis with moving dune and drifting sand. The outburst of aeolian sands is swift and forceful, and its accumulation is quick. Stripes of accumulated sands and dunes thus formed blanket the green land and the soil to make it difficult for plants to survive. In addition, the rainfall has been scarce but evaporation has been huge all the year round, plants are unable to grow up naturally. In these regions, people have developed various ways to treat sands: first, cultivating trees and grasses are planted to recover natural vegetation; secondly, various engineering methods for sand fixation (sand barrier) have been invented to stabilize sands so as to protect these trees and grasses, e.g. an obstacle is installed on the ground with materials like branches, straws, gravel, laths, wheat stalks, plastics boards to block sand drifting, control the direction, velocity and structure of wind sand movement. There are two types of sand barriers: even spread or vertical, and the latter is further subdivided into three types: high rise obstacles which height is 50 to 100 cm; low rise obstacles which height is 15 to 50 cm; and semi-concealed obstacles which only have the tops revealed above the ground. A mixed planting of trees, bushes and grasses to form headwind and leeward belts can slow down wind velocity, obstruct sand movement and fix sands, which are very effective ways and methods and most of which are worth being recommended and applied in the long run. In view of the broad areas of desert border and Gobi desert in our country, and the adverse climatic environment near the dry desert land where waterfall is scarce and wind sand is constant all the year round, however, these measures are far from satisfactory in that the vegetation thus developed is rather limited in size, takes too long and is too slow to take effect. For reference, please read "Climate Change and Desertification" published by China Meteorological Press in March 2003.

On the outskirts of the border area between oasis and the Gobi desert where pile foundation can be constructed, the three dimensional single row single body framework is adopted. The pile foundation is constructed at the entrance from where wind sand move over opposite the direction from which the wind blows. The structure of the framework is so shaped that it overlooks the desert and faces the direction from which the strongest wind blows with a protrudent arc. The framework gradually extends horizontally toward both sides in a curve, the length of which depends upon where the belt of winds heads for. Each section of framework measures 200 to 300 meters long, and can be interrupted according to the shape of the landscape, and is continued again horizontally in a curve. WSB 2 will be built 1.5 to 2 meters from the ground, the height of the first and the second storey of WSB (depth of trough) is 80 to 100 cm, and that of other stories is 50 cm. A miter joint network will be adopted between the upper and lower WSBs 2, and the distance between them is around 3 to 3.5 meters. The total height of the framework structure is 10 to 15 meters.

50 to 80 meters behind the single row single body frameworks along the direction of wind are frameworks of three dimensional dual row single body structure, the plane of which is perpendicular to the direction from which the strongest wind blows. The length of the framework is 40 to 50 meters, and the height is around 40 meters; the distance between and the number of vertical water towers, wind power generating towers, wind generating sets will be decided according to the vegetation area of the single row single body structure and of the ground. The wind power generating sets provide the electricity for pumping and storing water to irrigate all the plants. Plants can be cultivated on the leeward side of the framework so that they will not be mantled by sand drifts and can be provided water for absorption. Sources of water are available by digging well and pumping water.

As Aeolian sand flies through the three dimensional vegetation, part of the sands will bump upon the leaves and stalks of the plants and the framework and drop to the ground around the framework, others will drop not far from the leeward side of the framework along the wind whose speed has been reduced. In general, the sand behind the vegetation screen will not be swept up again by the wind whose speed has been reduced by the three dimensional vegetation. The height and strength of the three dimensional frameworks can provide a sustained and strong shield against the assault of heavy sandstorms for decades, blockading the crawl of drifting dunes towards the oasis. They can protect large areas of land and lead to a benign ecological cycle.

By erecting such a high rising framework near the entrance of supermarkets, department stores, clubs, theatres, parks, squares or beautiful scenery spots, and with the branches and leaves of the plants of vegetation, however, people may regard it as a visual pollution because it will to some extent cut off our view of beautiful buildings. Under such circumstances, the distance between the background buildings and the three dimensional frameworks should be extended. In addition, various artistic moldings can be designed to shape the horizontal beams and upright posts of the framework, so as to enrich their visual effects of beauty.

### BRIEF DESCRIPTION OF THE DRAWINGS:

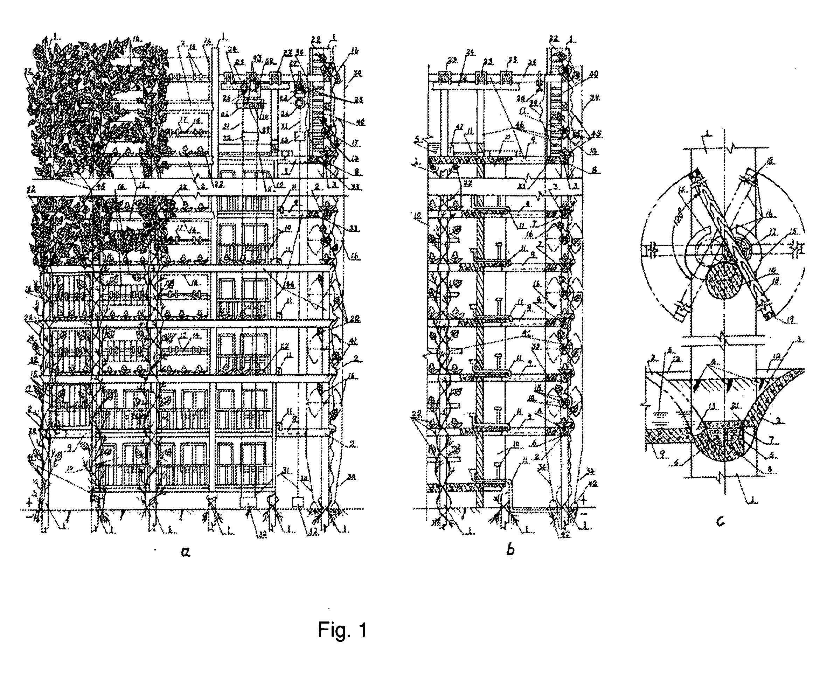

FIG. 1-a is a general view of the coupling structure of the invention;
FIG. 1-b is a left view of the coupling structure of the invention;
FIG. 1-c is a local enlargement section view of the invention;
FIG. 2-a an overhead view of the coupling structure of the invention;

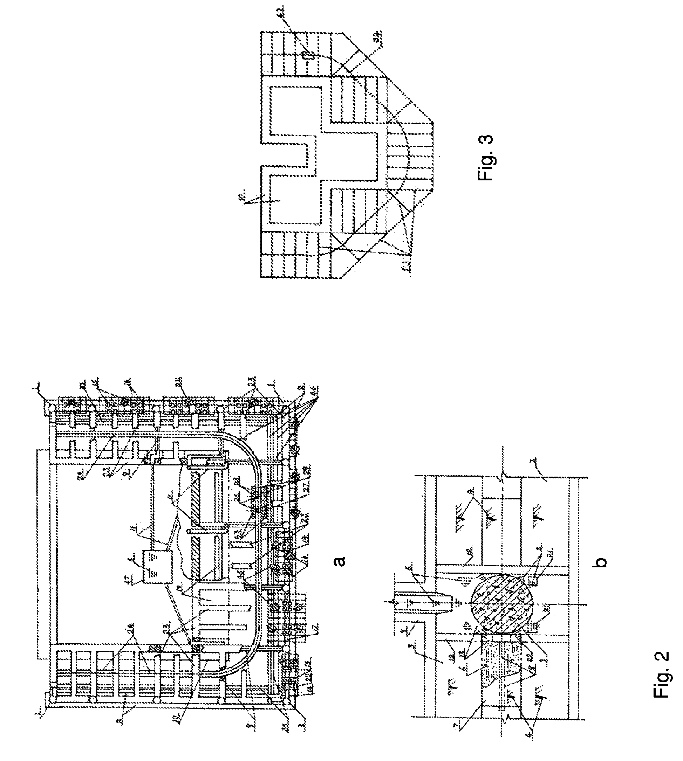

FIG. 2-b is a local enlargement section view of the invention;
FIG. 3 is a horizontal plan view of the Chinese word " 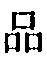 " structure of the invention;

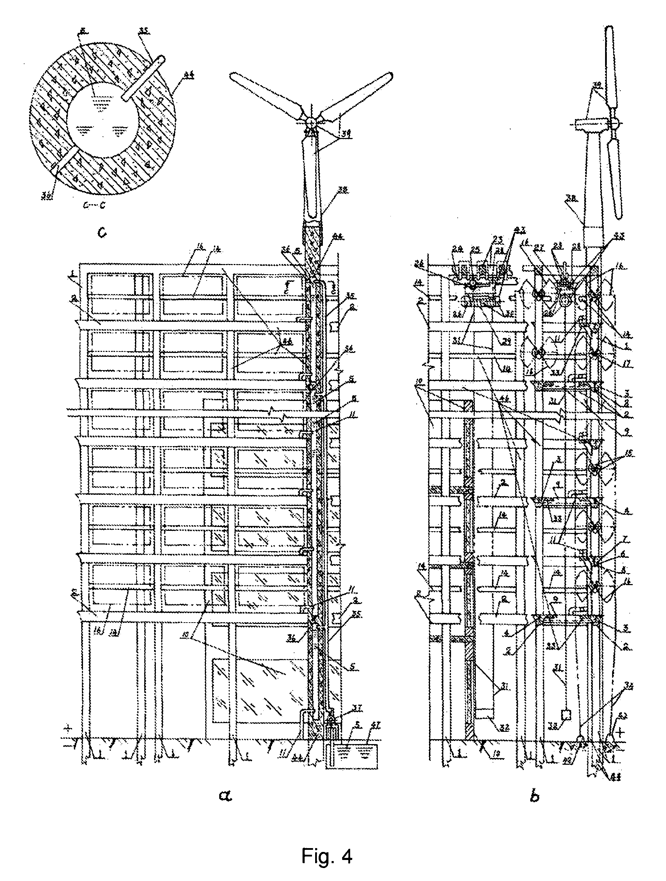

FIG. 4-a is a general view of the dual- row single body structure of the invention, with the drawing of plants omitted;
FIG. 4-b is a left view of the dual- row single body structure of the invention, with the drawing of plants omitted;
FIG. 4-c is a local enlargement section view of the upright post of the dual- row single body structure of the invention;

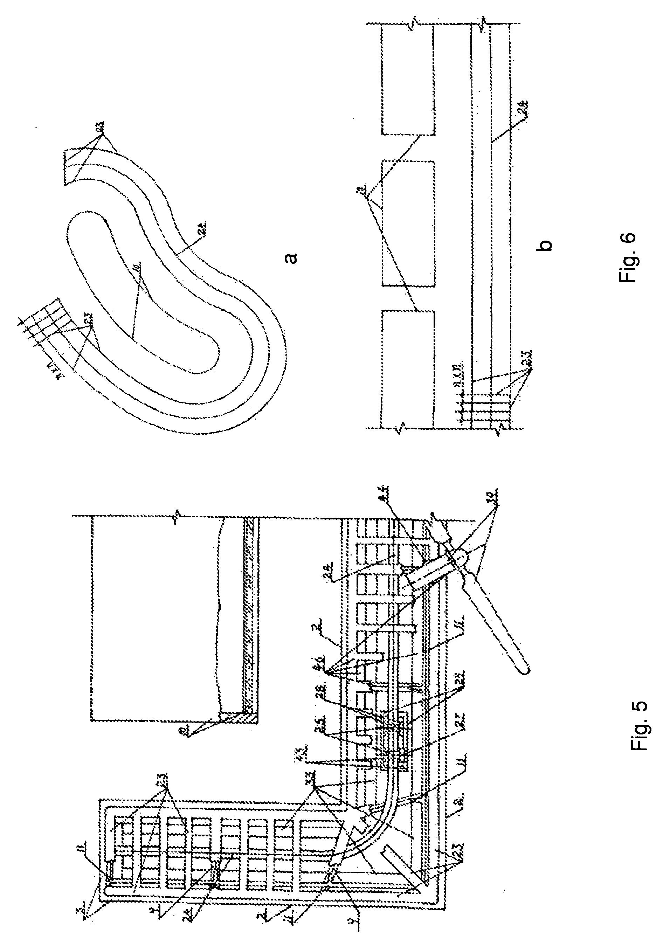

FIG. 5 is an overhead view of the dual- row single body of the invention, with the drawing of plants omitted;
FIG. 6-d is a schematic diagram of the overhead view of the curve structure of the dual- row single body structure of the invention;
FIG. 6-e is a schematic diagram of the overhead view of the straight line structure of the dual-row single body structure of the invention;

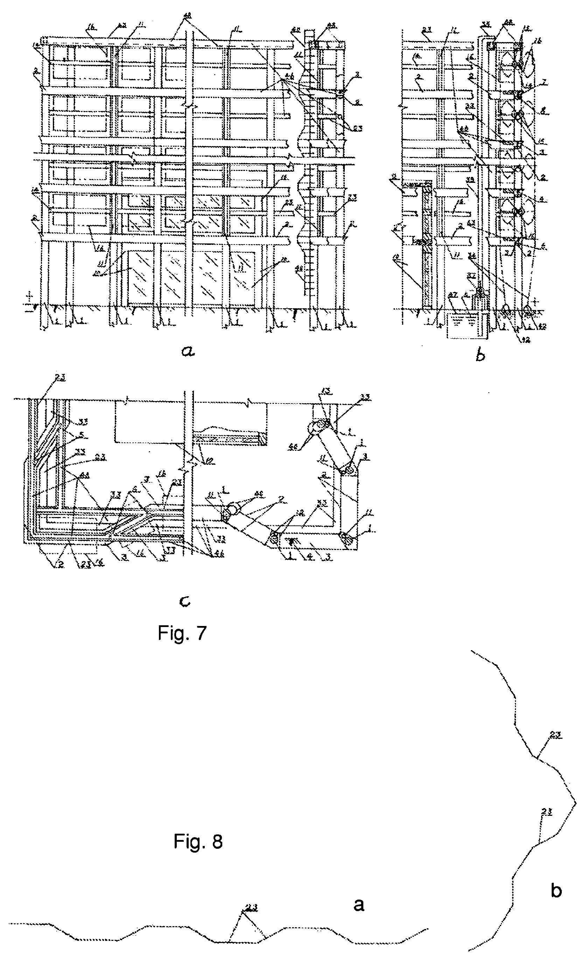

FIG. 7-a is a general view of the single-row single body trapezoid helix structure of the invention, with the drawing of plants omitted;
FIG. 7-b is a left view of the single-row single body trapezoid helix structure of the invention, with the drawing of plants omitted;
FIG. 7-c is an overhead view of the single-row single body trapezoid helix structure of the invention, with the drawing of plants omitted;
FIG. 8-a is a schematic diagram of the overhead view of the straight line recurrence of the single-row single body trapezoid helix structure of the invention;
FIG. 8-b is a schematic diagram of the overhead view of the curve recurrence of the single-row single body trapezoid helix structure of the invention;

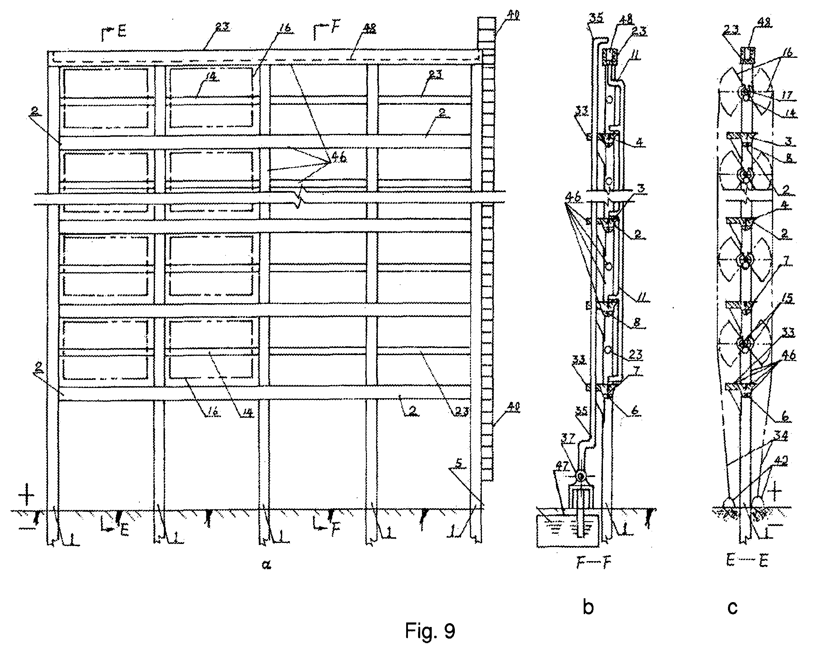

FIG. 9-a is a general view of the facade of the single-row single body structure of the invention, with the drawing of plants omitted;
FIG. 9-b is an E-E direction sectional view of the single-row single body structure of the invention, with the drawing of plants omitted;
FIG. 9-c is an F-F direction sectional view of the single-row single body structure of the invention, with the drawing of plants omitted;

### Description of preferred embodiments

In combination with the attached drawings, a further description of this invention is made in the following:
With the coupling structure of Figs. 1-a-b-c and Figs. 2-a-b, at a certain distance in parallel with house 10, to the east, south and west outskirts of the house, the upright post 1 of the pile foundation of the framework is built. 4 to 5 meters above at the upright post is the horizontal beam for water and soil trough (WSB 2), inside which is the V-shape water and soil trough 3 which is divided into two layers, the upper layer is soil 4, the lower is water 5 and sand 6; in the middle is the horizontal isolation plate 7, which is laid piece by piece, separating water and soil; vertical isolation plate 8 is the structure for water cycling; WSB 2 is connected to VWB 9, which in turn is connected to the house 10 at the other end, from where waste water of the residents flows through the drainage pipe 11 to the VWB 9, and then to the WSB 2 through water inlet 13 outside the vertical water and soil baffle plate 12 at the end of the WSB 2; the water flows through one side of the vertical isolation plate 8 and then the sand into another recycle, extra water will go through the water outlet 20 at the other end and be emitted through the water drainage hole 21; the soil will absorb water from the gaps between the horizontal isolation plates, and water can also enter the soil by evaporation. In FIG.s 1-a-b-c and FIG.s 2-a, 1.2 to 1.3 meters above the WSB 2 is the horizontal beam for carrying the turnover shutters (TSB), and the section of the TSB 14 is round in shape, along the length of which 2 to 6 pairs of ox-horn shaped radial claw stops 15 installed at certain intervals to withhold the turnover shutters 16. The axis 17 of the turnover shutter 16 is drilled holes at certain intervals along the length to be inserted with small round logs 18 which, in turn, are connected to square logs 19 on both ends with tenon and mortise joints. Fiber ropes 34 are fastened in the middle of both edges of the turnover shutter 16. They connect the turnover shutters of every storey from the top to the ground on both sides of the upright posts, and serve to adjust the angle of the turnover shutters from the ground. The two ropes can be fastened to the ground loop 42 after positioning the turnover shutters. The external surface of the TSB is tangent to the external surface of the axis of the turnover shutter; plants 22 are grown in the water and soil trough, and the branches and leaves of vines 41 can be directed to cover the turnover shutters.

In Figs. 1-a-b and FIG. 2-a, monorail slider 24 is installed onto the horizontal beam 23 at the top of the three dimensional framework, and the overhead trolley 43 and pulley 25 are mounted on the slider. An electric motor 26 drives the axis 27 of the pulley to move left and right along the slider. Under the supporting stand of the pulley 28 is a hoister mechanism 29, in which a motor 26 is used to drive rotating shaft cylinder 30 and wind steel cable 31 for lifting the basket 32; the basket must be hoisted to the top storey before it can be moved left and right. People and goods can be transported to the tread board 33 of the vertical grid on each storey of the three dimensional vegetation frame work in the basket.

FIG. 3 is the construction solution of the framework for coupling buildings with the Chinese word " 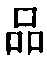 " structure from a horizontal overhead view. It represents one of a variety of structural forms.

The above is a description of coupling structure buildings. When houses at the foot of a high rise building are large supermarkets, department stores, clubs, theatres, or when they are auditoriums, refineries, power stations (with chimneys), a dual-row single body structure as in Figs. 4-a-b-c or FIG. 5, or a straight line or curve structure as in Figs. 6-d-e is adopted, which stands 4 to 8 meters away in parallel with the house 10 to the east, south and west. The inner row of upright posts 1 is connected with VWBs 9 which again is connected with outer row of upright posts 1. Some upright posts will be built larger in diameter to become hollow water towers 44 for water storage. They are intercepted every 3 to 5 storeys of vegetation frame height and water inlet pipes 35 are installed on each section, air outlet holes 36 are opened, and water outlet pipes 11 at the bottom to be connected to the water inlet 13 at the upper entrance of the WSB 2. Electric controlled magnetic valves are mounted at the water supply source to control water supply to high buildings from the ground.

By increasing the height of upright posts or the upright water towers 44 of the framework by 3 to 5 meters and fixing the steel structure tower 38 upon them to house the wind power generating set 39, electricity can be produced to provided power for raising water with pump 37, operating the overhead trolley 43 and illuminating. Water is raised with the pump 37, flows through the water supply pipe 35 and enters the upright water tower 44 for storage. The water for irrigation 5 can come either from waste water or from roughly treated polluted water stored in the water pool 47 to be drawn by the pump.

The above is an explanation of what is in common and what is different between the dual-row single body structure and the coupling structure. As to the maintenance and usage of the turnover shutters of vegetation, it's the same.

For buildings like wharfs, railway stations, flyovers, factories and auditoriums, a single-row single body trapezoid helix structure can be adopted, as in Figs. 7-a-b-c, or a straight line helix and an oscillation angle helix curve structure can be adopted, as in Figs. 8-d-e, in which at a certain distance in parallel with the house 10, the upright posts 1 of the framework structure are built to the east, south and west; the height of the framework is limited to 40 meters and less, no overhead trolleys will be installed. Instead, a climbing ladder 40 is provided for operators to climb up and down for working. Turnover shutters of vegetation are optional for framework structures around such types of background buildings and venues as flyovers, auditoriums or public squares; the horizontal beams at the top of such frameworks are built into inter-connected water troughs 48 to store water. At the bottom of the water troughs are water outlet pipes 11. When no power source is available and yet a large amount of water is required, the upright water storage posts of the framework structure can also be built higher to house the tower for the wind power generating sets, so as to provide electricity for pumping water.

The above is an explanation of what is in common and what is different between the single-row single body trapezoid helix structure and the other two structures mentioned before. As to the maintenance and usage of the turnover shutters of vegetation, it's the same.

In areas on both sides of expressways and railways, squares, highways and factories, where the background is very low, the single row single body structure can be adopted, as in Figs. 9-a-b-c, with the framework taking the form of either a straight or curve line, facing east, south and west, the upright posts are limited to 20 meters high or less. No overhead trolley is required, and workers can climb up and down with climbing ladders 40. The top horizontal beam of the framework can be converted into water troughs 48 to keep water, and water outlet pipes are mounted on the bottom of the troughs. Turnover shutters of vegetation are optional. Water pump 37 is adopted to raise water.

The above is an explanation for what is in common and what is different between a single row single body structure and the other three types of structures mentioned before. As to the vegetation, maintenance and methods of operation, it is the same as that of the previous three types.

## Claims

1. A three dimensional planting construction for a vegetation, including: three dimensional water storage, wind power generation and mechanical drive which comprise :
a three dimensional framework (46) made of reinforced concrete and wood and constructed around background houses, buildings or venues to carry water (5), soil (4) and plants (22);
turnover shutters (16) for vegetation (45) designed to adjust green shade and illumination by being covered by branches and leaves of vegetation;
wind power generating sets (39) installed to provide electricity;
well water, waste water and roughly treated polluted water utilized for plants to absorb; water pumps (37) employed to raise water for irrigation;
overhead trolley (43) powered by electricity mounted on the top of the three dimensional framework (46);
**characterized in that**
the three dimensional water storage comprises
water and soil trough (3) on the three dimensional framework (46), in which the plants (22) covering all the stories from the lowest to the highest of the houses (10), buildings or venues are grown;
the three dimensional framework (46) converted into hollow upright water tower (44) and water troughs (48),
rooftop converted into water pool (47),
waste water from the residence, office buildings and department stores utilized by directly draining it through a vertical water trough (9) on the framework for the water and soil trough (3);
well water raised to water tower (44) or water trough (48) with water pump (37); other waste and polluted water concentrated to the water pool (47) after rough treatment.

2. A three dimensional planting construction for a vegetation according to claim 1,
wherein the wind power generating sets, the mechanical drive and the water pumps for irrigation are **characterized by**
the three dimensional framework configured to be utilized to seat the wind power generating set (39) and tower (38) to provide electricity,
mechanical pulley (25) driven with electricity and configured to move horizontally to the left and right along a monorail slider (24) on a horizontal beam (23) of a building, and to lift a basket up and down with the structure of the upright posts (1),
upright posts (44) of water tower, the diameter of which is enlarged or the height of which is increased to install the tower of wind power generating set, and
the electricity from the wind power generating set or from the power grid used to raise water with the pump (37) installed on the well water pool (47) by utilizing technology of raising water with pumps.

3. A three dimensional planting construction for a vegetation according to claim 1,
wherein the three dimensional framework , is **characterized by**:
reinforced concrete used to construct multiple upright posts (1) for supporting a plurality of stories of water soil troughs (2) or vertical water troughs (9) the turnover shutters (14) holding the turnover shutters (16) made of wood and positioned on the water soil trough (2) of each storey,
the water and soil trough (3) positioned on the water soil trough (2) and being of V shape which is divided into two layers, soil (4) on the upper layer of the water and soil trough (3) and water (5) and sand (6) on the lower layer of the water and soil trough (3) horizontal isolation plates laid in between of the lower and upper layers,
vertical isolation plates (8) for water circulation which are positioned under the horizontal isolation plates,
vertical water and soil baffle plate (12) on both ends of the water and soil trough, and
water inlet (13) or water drainage hole (21) for the water outlet (20) outside or under the trough, the tread board (33) in parallel with and to the inner side of the water soil trough (2).

4. A three dimensional planting construction for a vegetation according to claim 1 or 3, wherein the turnover shutters are configured to rotate 120° relevant to the direct sunlight, either in parallel with or perpendicular to the direct sunlight and the turnover shutter is further **characterized by**:
the vines (41) of the plant (22) pulled onto the network of the turnover shutter (16) made of wood,
a large log configured to be used as the axis (17),
and small logs (18) configured to be inserted through the axis (17) along its length at regular intervals to form a network,
the small logs connected with square logs (19) with tenon and mortise joints, on both ends of the small logs,
fiber ropes (34) configured to be fastened in the middle of both edges of the turnover shutter (16) to connect the turnover shutters (1) of every storey from the top to the ground on both sides of the upright posts (1),
the two ropes configured to be fastened to the ground loop (42),
the horizontal beam of the three dimensional framework built into a round-section one, and along the length of which 2 to 6 pairs of ox-horn claw stops configured to be mounted to hook the axis (17) of the turnover shutter (16) at regular intervals, the external surface of the axis tangent to the external surface of the turnover shutters (14).

5. A three dimensional planting construction for a vegetation according to claim 1, wherein the overhead trolley is **characterized by**:
single pulleys installed on the topmost horizontal beam (23) of the three dimensional framework,
the pulley set (25) of the overhead trolley (43) configured to be mounted onto the slider rail (24),
an electric motor (26) configured to drive the axis (27) of the pulley to move left and right horizontally along the slider,
a hoister mechanism (29) under the supporting stand of the pulley (28), in which a electric motor (26) is used to drive rotating shaft cylinder (30) and wind steel cable (31) for lifting the basket (32)
the power source from the wind power generator or from the power grid.

6. A three dimensional planting construction for a vegetation according to claim 1, wherein the three dimensional framework structure (46) constructed around the background house (10), other buildings or venues to carry water (5) and soil (4) for growing plants (22) is **characterized by**:
a coupling structure adopted around the background house,
the VWB (9) on the upright posts (1) configured to be connected to the water soil trough (2) at one end, and to the house (10) at the other end,
waste water from the residence drained through the drainage pipe (11) to the vertical water trough (9),
the water (5) flowing through the vertical water trough (9) to the water inlet (13) above the water soil trough (2) and again into the water and soil trough (3);
wherein when the foot of the buildings are large supermarkets, department stores, clubs, theatres, or buildings like large stadiums, refineries, power stations (with chimneys), a straight-lined or curved dual-row single body structure which is detached from the main body structure can be built to the east, south and west of and 4 to 8 meters away in parallel with the house (10) or other buildings, which has double rows of upright posts (1), and upon them the horizontal beams are constructed;
for buildings like wharfs, railway stations, flyovers, factories, auditoriums, squares and so on, a single-row single body trapezoid helix structure, including a straight line helix and an oscillation angle helix curve structure, can be adopted, upright posts (1) of the framework are installed to the east, south and west, the height of which should not exceed 40 meters, workers can climb up the framework by ladders (40) during work;
in areas on both sides of expressways and railways, squares, highways and factories, where the background buildings are relatively low, the single row single body structure can be adopted, with the framework taking the form of either a straight or curved line, facing east, south and west, being less than 20 meters in height, workers can climb up and down with ladders (40).

7. A three dimensional planting construction for a vegetation according to claim 1, wherein on the outskirts of the border area between oasis and the Gobi desert where pile foundation can be constructed, the three dimensional single row single body framework is adopted, the pile foundation is constructed at the entrance from where wind sand move over opposite the direction from which the wind blows, the structure of the framework is so shaped that it overlooks the desert and faces the direction from which the strongest wind blows with a protrudent arc, the framework is configured to gradually extend horizontally toward both sides in a curve, WSB (2) is built 1.5 to 2 meters from the ground, the height of the first and the second storey of water soil trough (2) is 80 to 100 cm, and that of the above stories is 50 cm, a miter joint network configured to be adopted between the upper and lower water soil troughs (2), and the distance between them is around 3 to 3.5 meters, the total height of the framework structure is 10 to 15 cm; 50 to 80 meters behind them, along the direction of wind are frameworks of three dimensional dual- row single body structure, the plane of which is perpendicular to the direction from which the strongest wind blows, the length of the framework is 40 to 50 meters, and the height is around 40 meters, upright posts are built as water towers and wind power generation tower to house wind power generating set (39), the electricity produced is used to pump and store water, sources of water are available by digging well and pumping water.

8. A three dimensional planting construction for a vegetation according to claim 1, wherein the three dimensional water storage is **characterized by**:
the upright posts (1) configured to be enlarged in diameter to be built into hollow upright posts for storing water inside,
vertical water tower (44) configured to be intersected every 3 to 5 stories of the vegetation (46) frames, on each section of which water inlet pipes (35) are installed and air exhaust outlets are drilled at the top, water outlet pipes (11) installed at the bottom, or
the horizontal beam (23) built at the top of the framework into U shape troughs (48), and water inlet pipes (35) installed on the top and water outlet pipes (11) installed at the bottom.

9. A three dimensional planting construction for a vegetation according to claim 1, **characterized by**:
all the three dimensional frameworks (46) having 5 to 10 meters higher than the background house (10) or other buildings; if any side of a house or building has no windows on it, or needs no direct sunlight, no turnover shutters of vegetation being required on this side.

## Patentansprüche

1. Dreidimensionale Anpflanzungskonstruktion für eine Vegetation, enthaltend eine dreidimensionale Wasserspeicherung, eine Windenergieerzeugung und einen mechanischen Antrieb, umfassend:
einen dreidimensionalen Rahmen (46), der aus Stahlbeton und Holz gefertigt und um Hintergrundhäuser, Bauten oder Plätze errichtet ist, um Wasser (5), Erde (4) und Pflanzen (22) zu tragen;
Schwenkklappen (16) für Vegetation (45), die gestaltet sind, grüne Beschattung und Beleuchtung auszurichten, indem sie durch Zweige und Blätter der Vegetation bedeckt werden;
Windenergieerzeugungsgruppen (39), die installiert sind, um Elektrizität bereitzustellen;
Brunnenwasser, Abwasser und grob aufbereitetes verschmutztes Wasser, das verwendet wird, um von Pflanzen aufgenommen zu werden;
Wasserpumpen (37), die genutzt werden, um Wasser zur Bewässerung nach oben zu befördern;
einen elektrisch betriebenen Hängelaufwagen (43), der oben am dreidimensionalen Rahmen (46) angebracht ist;
**dadurch gekennzeichnet, dass**
die dreidimensionale Wasserspeicherung Folgendes umfasst:
einen Wasser- und Erdtrog (3) am dreidimensionalen Rahmen (46), in dem die Pflanzen (22), die alle Ebenen der Häuser (10), Bauten bzw. Plätze von der untersten bis zur höchsten bedecken, gezüchtet werden;
wobei der dreidimensionale Rahmen (46) in einen hohlen senkrechten Wasserturm (44) und in Wassertröge (48) umgewandelt wird,
wobei das Dach in ein Wasserbecken (47) umgewandelt wird,
wobei Abwasser aus Wohnungen, Bürogebäuden und Geschäften verwendet wird, indem es direkt durch den vertikalen Wassertrog (9) am Rahmen für den Wasser- und Erdtrog (3) abgeleitet wird;
wobei Brunnenwasser mit der Wasserpumpe (37) nach oben zum Wasserturm (44) oder zum Wassertrog (48) befördert wird;
wobei sonstiges Abwasser und verschmutztes Wasser nach einer groben Aufbereitung im Wasserbecken (47) gesammelt wird.

2. Dreidimensionale Anpflanzungskonstruktion für eine Vegetation nach Anspruch 1,
wobei die Windenergieerzeugungsgruppen, der mechanische Antrieb und die Wasserpumpen zur Bewässerung **gekennzeichnet sind durch**
den dreidimensionalen Rahmen, der gestaltet ist, als Aufnahme für die Windenergieerzeugungsgruppe (39) und den Turm (38) verwendet zu werden, zum Bereitstellen von Strom,
eine mechanische Rolle (25), die mit Strom angetrieben wird und gestaltet ist, sich entlang eines Schienengleiters (24) an einem horizontalen Träger (23) eines Gebäudes horizontal nach links und rechts zu bewegen und einen Korb mit der Struktur der senkrechten Pfosten (1) nach oben und nach unten zu befördern,
senkrechte Pfosten (44) des Wasserturms, deren Durchmesser verbreitert oder deren Höhe vergrößert ist, zum Installieren des Turms der Windenergieerzeugungsgruppe, und
den Strom von der Windenergieerzeugungsgruppe oder aus dem Energieversorgungsnetz, der genutzt wird, um Wasser mit der am Brunnenwasserbecken (47) installierten Pumpe (37) **durch** Nutzung einer Technologie zum Hochfördern von Wasser mit Pumpen nach oben zu befördern.

3. Dreidimensionale Anpflanzungskonstruktion für eine Vegetation nach Anspruch 1, wobei der dreidimensionale Rahmen **gekennzeichnet ist durch**:
Stahlbeton, der zur Errichtung mehrerer senkrechter Pfosten (1) zum Tragen einer Mehrzahl von Ebenen aus Wasser-Erde-Trögen (2) oder vertikalen Wassertrögen (9) genutzt wird,
die Schwenkklappen (14), welche die Schwenkklappen (16) halten, die aus Holz gefertigt sind und am Wasser-Erde-Trog (2) jeder Ebene positioniert sind,
den Wasser- und Erdtrog (3), der am Wasser-Erde-Trog (2) positioniert ist und eine V-Form aufweist, die in zwei Schichten unterteilt ist, mit Erde (4) in der oberen Schicht des Wasser- und Erdtrogs (3) sowie Wasser (5) und Sand (6) in der unteren Schicht des Wasser- und Erdtrogs (3),
horizontale Isolierplatten, die zwischen der oberen und der unteren Schicht angeordnet sind,
vertikale Isolierplatten (8) zur Wasserzirkulation, die unter den horizontalen Isolierplatten positioniert sind,
ein vertikales Wasser- und Erdprallblech (12) an beiden Enden des Wasser- und Erdtrogs, und
einen Wassereinlass (13) oder ein Wasserablaufloch (21) für den Wasserauslass (20) außerhalb oder unterhalb des Trogs, wobei sich das Trittbrett (33) parallel mit und zu der Innenseite des Wasser-Erde-Trogs (2) befindet.

4. Dreidimensionale Anpflanzungskonstruktion für eine Vegetation nach Anspruch 1 oder 3, wobei die Schwenkklappen gestaltet sind, sich um 120° entsprechend der direkten Sonneinstrahlung entweder parallel oder senkrecht zur direkten Sonneneinstrahlung zu drehen, und wobei die Schwenkklappe ferner **gekennzeichnet ist durch**:
die Ranken (41) der Pflanze (22), die auf das Geflecht der aus Holz gefertigten Schwenkklappe (16) gezogen werden,
eine große Bohle, die gestaltet ist, als Achse (17) genutzt zu werden,
und kleine Bohlen (18), die gestaltet sind, **durch** die Achse (17) entlang ihrer Länge in gleichmäßigen Abständen geführt zu werden, um ein Geflecht auszubilden,
die kleinen Bohlen, die mit Vierkantbohlen (19) mit Schlitz- und Zapfenverbindungen an beiden Enden der kleinen Bohlen verbunden sind,
Faserseile (34), die gestaltet sind, in der Mitte beider Flanken der Schwenkklappe (16) befestigt zu werden, um die Schwenkklappen (1) jeder Ebene von oben bis zum Boden auf beiden Seiten der senkrechten Pfosten (1) zu verbinden,
die beiden Seile, die gestaltet sind, mit der Erdschleife (42) verbunden zu sein,
den horizontalen Träger des dreidimensionalen Rahmens, der in einen mit rundem Querschnitt errichtet ist und entlang dessen Länge 2 bis 6 Paare von Anschlägen aus Rinderklauenhorn gestaltet sind, befestigt zu sein, um die Achse (17) der Schwenkklappe (16) in gleichmäßigen Abständen einzuhaken, wobei die Außenfläche der Achse tangential zur Außenfläche der Schwenkklappen (14) verläuft.

5. Dreidimensionale Anpflanzungskonstruktion für eine Vegetation nach Anspruch 1, wobei der Hängelaufwagen **gekennzeichnet ist durch**:
einzelne Rollen, die am obersten horizontalen Träger (23) des dreidimensionalen Rahmens installiert sind,
die Rollengruppe (25) des Hängelaufwagens (43), die gestaltet ist, an der Gleitschiene (24) befestigt zu werden,
einen Elektromotor (26), der gestaltet ist, die Rollenachse (27) zur horizontalen Bewegung nach links und rechts entlang des Gleiters anzutreiben,
einen Hubmechanismus (29) unter dem Träger der Rolle (28), in dem ein Elektromotor (26) genutzt wird, um einen Zylinder (30) mit rotierender Welle und ein gewundenes Stahlseil (31) anzutreiben, um den Korb (32) anzuheben,
die Energiequelle vom Windenergiegenerator oder aus dem Energieversorgungsnetz.

6. Dreidimensionale Anpflanzungskonstruktion für eine Vegetation nach Anspruch 1, wobei die dreidimensionale Rahmenstruktur (46), die um das Hintergrundhaus (10), sonstige Bauten oder Plätze errichtet ist, um Wasser (5) und Erde (4) zum Züchten von Pflanzen (22) zu tragen, **gekennzeichnet ist durch**:
eine um das Hintergrundhaus vorgesehene Kopplungsstruktur,
den VWB (9) an den senkrechten Pfosten (1), der gestaltet ist, an einem Ende mit dem Wasser-Erde-Trog (2) und am anderen Ende mit dem Haus (10) verbunden zu sein,
Abwasser aus den Wohnungen, das **durch** das Ableitungsrohr (11) zum vertikalen Wassertrog (9) abgeleitet wird,
das Wasser (5), das **durch** den vertikalen Wassertrog (9) zum Wassereinlass (13) über dem Wasser-Erde-Trog (2) und wieder in den Wasser- und Erdtrog (3) fließt;
wobei, wenn sich am Fuß der Bauten große Supermärkte, Geschäfte, Clubs, Theater oder Bauten wie große Stadien, Raffinerien, Kraftwerke (mit Schornsteinen) befinden, eine geradlinige oder gekrümmte zweireihige Einzelkörperstruktur, die von der Hauptkörperstruktur getrennt ist, auf der östlichen, südlichen und westlichen Seite in einer Entfernung von 4 bis 8 Metern parallel zum Haus (10) bzw. zu den sonstigen Bauten errichtet werden kann, die zwei Reihen senkrechter Pfosten (1) aufweist, an denen die horizontalen Träger errichtet werden;
für Bauten wie Anlegestellen, Bahnhöfe, Überführungen, Fabriken, Auditorien, Plätze usw. eine einreihige trapezoide schraubenförmige Einkörperstruktur, die eine geradlinige Schraube und eine in einem Oszillationswinkel gekrümmte Schraubenstruktur enthält, vorgesehen werden kann, senkrechte Pfosten (1) des Rahmens auf der östlichen, südlichen und westlichen Seite installiert werden, deren Höhe 40 Meter nicht überschreiten sollte, wobei Arbeiter während der Arbeit an Leitern (40) am Rahmen nach oben klettern können;
in Bereichen auf beiden Seiten von Schnellstraßen und Eisenbahnstrecken, Plätzen, Autobahnen und Fabriken, in denen die Hintergrundbauten relativ niedrig sind, die einreihige Einzelkörperstruktur vorgesehen werden kann, wobei der Rahmen die Form einer geraden oder gekrümmten Linie annimmt, nach Osten, Süden und Westen gerichtet ist und eine Höhe von weniger als 20 Metern aufweist, wobei Arbeiter an Leitern (40) nach oben und unten klettern können.

7. Dreidimensionale Anpflanzungskonstruktion für eine Vegetation nach Anspruch 1, wobei an den Rändern des Grenzbereichs zwischen einer Oase und der Wüste Gobi, in dem Pfahlgründungen errichtet werden können, der dreidimensionale einreihige Einkörperrahmen vorgesehen wird, wobei die Pfahlgründung am Zugang errichtet wird, von wo Wind Sand bewegen über entgegen der Richtung, aus welcher der Wind weht, wobei die Rahmenstruktur so geformt ist, dass sie mit einem vorstehenden Bogen die Wüste überragt und der Richtung zugewandt ist, aus welcher der stärkste Wind weht, wobei der Rahmen gestaltet ist, sich graduell horizontal in beidseitiger Richtung in einer Kurve zu erstrecken, der WSB (2) 1,5 bis 2 Meter vom Boden errichtet ist, wobei die Höhe der ersten und zweiten Ebene des Wasser-Erde-Trogs (2) 80 bis 100 cm beträgt und die der darüber liegenden Ebenen 50 cm beträgt, wobei ein Gehrungsverbund gestaltet ist, um zwischen den oberen und den unteren Wasser-Erde-Trögen (2) vorgesehen zu sein, und wobei der Abstand zwischen diesen etwa 3 bis 3,5 Meter beträgt, wobei die Gesamthöhe der Rahmenstruktur 10 bis 15 cm beträgt; wobei 50 bis 80 Meter dahinter entlang der Windrichtung Rahmen einer dreidimensionalen zweireihigen Einzelkörperstruktur angeordnet sind, deren Fläche senkrecht zu der Richtung, aus welcher der stärkste Wind weht, ist, wobei die Rahmenlänge 40 bis 50 Meter beträgt und die Höhe etwa 40 Meter beträgt, wobei senkrechte Pfosten als Wassertürme und Windenergieerzeugungstürme zur Aufnahme der Windenergieerzeugungsgruppe (39) errichtet werden, wobei der erzeugte Strom zum Pumpen und Speichern von Wasser genutzt wird und wobei Wasserquellen durch Brunnenbau und Wasserförderung erschlossen werden.

8. Dreidimensionale Anpflanzungskonstruktion für eine Vegetation nach Anspruch 1, wobei die dreidimensionale Wasserspeicherung **gekennzeichnet ist durch**:
die senkrechten Pfosten (1), die gestaltet sind, im Durchmesser verbreitert zu sein, um in hohle senkrechte Pfosten eingebaut zu werden, um darin Wasser zu speichern,
den vertikalen Wasserturm (44), der gestaltet ist, alle 3 bis 5 Ebenen der Vegetationsrahmen (46) gekreuzt zu werden, wobei an jeder Kreuzung Wassereinlassrohre (35) installiert sind und oben Lüftungsauslasse gebohrt sind und unten Wasserauslassrohre (11) installiert sind, oder
den horizontalen Träger (23), der oben am Rahmen in U-förmigen Trögen (48) errichtet wird, wobei oben Wassereinlassrohre (35) installiert sind und unten Wasserauslassrohre (11) installiert sind.

9. Dreidimensionale Anpflanzungskonstruktion für eine Vegetation nach Anspruch 1, **dadurch gekennzeichnet, dass**
alle der dreidimensionalen Rahmen (46) 5 bis 10 Meter höher als das Hintergrundhaus (10) bzw. die anderen Bauten sind, wobei, wenn eine Seite eines Hauses bzw. der Bauten kein Fenster darin aufweist oder keine direkte Sonneneinstrahlung benötigt, auf dieser Seite keine Schwenkklappen mit Vegetation erforderlich sind.

## Revendications

1. Construction tridimensionnelle pour plantation pour une végétation, avec : stockage d'eau tridimensionnel, production d'énergie éolienne et entraînement mécanique, comprenant :
un châssis tridimensionnel (46) constitué de béton armé et de bois et construit autour de maisons, bâtiments ou sites supports, pour contenir de l'eau (5), du sol (4) et des plantes (22) ;
des volets basculants (16) pour la végétation (45), conçus afin d'ajuster l'ombre et l'éclairage des plantes en étant recouverts de branches et de feuilles de végétation ;
des systèmes générateurs d'énergie éolienne (39) installés afin de fournir de l'électricité ;
de l'eau de puits, des eaux usées et des eaux polluées sommairement traitées utilisées pour l'absorption par les plantes ;
des pompes à eau (37) employées afin de relever l'eau pour l'irrigation ;
des chariots suspendus (43) alimentés à l'électricité montés sur le dessus du châssis tridimensionnel (46) ;
**caractérisée en ce que**
le stockage d'eau tridimensionnel comprend
un bac eau et sol (3) sur le châssis tridimensionnel (46), dans lequel sont cultivées les plantes (22) couvrant tous les étages, du plus bas au plus élevé, des maisons (10), bâtiments ou sites :
le châssis tridimensionnel (46) converti en château d'eau vertical creux (44) et en bacs à eau (48),
le toit converti en bassin à eau (47),
des eaux usées de la résidence, des immeubles de bureaux et des magasins utilisées en les drainant directement par un bac à eau vertical (9) sur le châssis pour le bac eau et sol (3) ;
de l'eau de puits relevée dans le château d'eau (44) ou le bac à eau (48) à l'aide de la pompe à eau (37) ;
d'autres eaux usées et polluées collectées dans le bassin à eau (47) après traitement sommaire.

2. Une construction tridimensionnelle pour plantation pour une végétation selon la revendication 1, les systèmes de génération d'énergie éolienne, l'entraînement mécanique et les pompes à eau pour l'irrigation étant **caractérisés par**
le châssis tridimensionnel configuré afin d'être utilisé pour accueillir le système (39) et la tour (38) de génération d'énergie éolienne pour fournir de l'électricité,
une poulie mécanique (25) entraînée électriquement et configurée pour se déplacer horizontalement vers la gauche et vers la droite le long d'une glissière monorail (24) sur une poutre horizontale (23) d'un bâtiment, et pour monter et descendre un panier avec la structure des montants verticaux (1),
des montants verticaux (44) de château d'eau, dont le diamètre est agrandi ou dont la hauteur est augmentée afin d'installer la tour du système de génération d'énergie éolienne, et
l'électricité du système de génération d'énergie éolienne ou du réseau électrique utilisée afin de relever l'eau à l'aide de la pompe (37) installée sur le bassin à eau de puits (47) en utilisant une technologie de relevage d'eau à l'aide de pompes.

3. Une construction tridimensionnelle pour plantation pour une végétation selon la revendication 1, le châssis tridimensionnel étant **caractérisé par** :
du béton armé utilisé pour construire de multiples montants verticaux (1) pour supporter une pluralité d'étages de bacs sol eau (2) ou de bacs à eau verticaux (9),
les volets basculants (14) supportant les volets basculants (16) faits de bois et positionnés sur le bac sol eau (2) de chaque étage,
le bac eau et sol (3) positionné sur le bac sol eau (2) et ayant une forme en V, lequel est divisé en deux couches, du sol (4) sur la couche supérieure du bac eau et sol (3) et de l'eau (5) et du sable (6) sur la couche inférieure du bac eau et sol (3) des plaques d'isolation horizontales placées entre les couches inférieure et supérieure, des plaques d'isolation verticales (8) pour la circulation de l'eau, lesquelles sont positionnées sous les plaques d'isolation horizontales,
une plaque de cloisonnage verticale pour eau et sol (12) à chaque extrémité du bac eau et sol, et une prise d'eau (13) ou un orifice de drainage d'eau (21) pour la sortie d'eau (20) à l'extérieur du bac ou sous celui-ci, la plate-forme (33) étant vers le côté intérieur du bac sol eau (2) et parallèle à celui-ci.

4. Une construction tridimensionnelle pour plantation pour une végétation selon les revendications 1 ou 3, les volets basculants étant configurés pour pivoter sur 120° en fonction de la lumière solaire directe, soit parallèlement soit perpendiculairement à la lumière solaire directe et le volet basculant étant de plus **caractérisé par** :
les vignes (41) de la plante (22) tirées sur le réseau du volet basculant (16) en bois, un rondin de grande taille configuré pour être utilisé en tant qu'axe (17),
et des rondins de petite taille (18) configurés afin d'être insérés à travers l'axe (17) à intervalles réguliers sur sa longueur, afin de former un réseau,
les rondins de petite taille reliés avec des rondins carrés (19) avec des assemblages par tenon et mortaise, aux deux extrémités des rondins de petite taille,
des cordes en fibres (34) configurées afin d'être attachées au milieu des deux extrémités du volet basculant (16) pour relier les volets basculants (1) de chaque étage, du haut au bas, sur les deux côtés des montants verticaux (1),
les deux cordes configurées afin d'être attachées à la boucle de sol (42),
la poutre horizontale du châssis tridimensionnel intégré à une poutre de section ronde, et sur la longueur de laquelle 2 à 6 paires de griffes d'arrêt en corne de boeuf configurées pour être montées pour accrocher l'axe (17) du volet basculant (16) à intervalles réguliers, la surface extérieure de l'axe tangente à la surface extérieure des volets basculants (14).

5. Une construction tridimensionnelle pour plantation pour une végétation selon la revendication 1, le chariot suspendu étant **caractérisé par** :
des poulies individuelles installées sur la poutre horizontale supérieure (23) du châssis tridimensionnel,
le système de poulies (25) du chariot suspendu (43) configuré afin d'être monté sur le rail glissière (24),
un moteur électrique (26) configuré pour entraîner l'axe (27) de la poulie afin de se déplacer vers la gauche et vers la droite horizontalement le long de la glissière,
un mécanisme de levage (29) sous le bâti support de la poulie (28), dans lequel un moteur électrique (26) est utilisé afin d'entraîner un cylindre d'arbre de rotation (30) et enrouler un câble d'acier (31) pour monter le panier (32)
la source d'alimentation du générateur d'énergie éolienne ou du réseau électrique.

6. Une construction tridimensionnelle pour plantation pour une végétation selon la revendication 1, la structure de châssis tridimensionnelle (46) construite autour de la maison support (10), d'autres bâtiments ou sites pour contenir de l'eau (5) et du sol (4) pour cultiver des plantes (22) étant **caractérisée par** :
une structure d'accouplement utilisée autour de la maison support,
le bac à eau vertical (9) sur les montants verticaux (1) configuré pour être connecté au bac sol eau (2) à une extrémité, et à la maison (10) à l'autre extrémité,
les eaux usées de la résidence drainées par le tuyau de drainage (11) vers le bac à eau vertical (9),
l'eau (5) coulant par le bac à eau vertical (9) vers la prise d'eau (13) au-dessus du bac sol eau (2) et de nouveau dans le bac eau et sol (3) ;
si la base des bâtiments sont des supermarchés, magasins, clubs, théâtres de grande taille, ou des bâtiments tels que des stades, raffineries, centrales électriques (avec cheminées) de grandes dimensions, une structure monocorps à double rangée rectiligne ou courbe qui est détachée de la structure du corps principal peut être construite à une distance de 4 à 8 mètres vers l'est, le sud et l'ouest de la maison (10) ou d'autres bâtiments, parallèlement à ceux-ci, laquelle structure possède des doubles rangées de montants verticaux (1), les poutres horizontales étant construites sur ceux-ci ;
pour les bâtiments tels que les quais, gares, viaducs, usines, auditoriums, places, etc., une structure en hélice trapézoïdale monocorps à une rangée, y compris une structure en hélice rectiligne et une structure courbe en hélice avec angle d'oscillation peut être adoptée, les montants verticaux (1) du châssis étant installés vers l'est, le sud et l'ouest, leur hauteur ne devant pas être supérieure à 40 mètres, les ouvriers pouvant monter sur le châssis à l'aide d'échelles (40) pendant le travail ;
dans les zones des deux côtés de voies rapides et de voies ferrées, places, autoroutes et usines, où les bâtiments supports sont relativement bas, la structure monocorps à une rangée peut être adoptée, avec le châssis prenant la forme d'une ligne soit droite soit courbe, tournée vers l'est, le sud et l'ouest, ayant une hauteur inférieure à 20 mètres, les ouvriers pouvant monter et descendre à l'aide d'échelles (40).

7. Une construction tridimensionnelle pour plantation pour une végétation selon la revendication 1, le châssis tridimensionnel monocorps à une rangée étant adopté en périphérie de la zone frontalière entre l'oasis et le désert de Gobi où la fondation sur pieux peut être construite, la fondation sur pieux étant construite à l'entrée où le sable est apporté par le vent, face à la direction d'où souffle le vent, la structure du châssis étant formée de telle sorte que celui-ci donne sur le désert et fait face à la direction d'où souffle le vent le plus fort avec un arc saillant, le châssis étant configuré pour s'étendre progressivement horizontalement vers les deux côtés en courbe, le bac à eau vertical (2) étant construit à une hauteur de 1,5 à 2 m du sol, la hauteur des premier et deuxième étages du bac sol eau (2) étant de 80 à 100 cm, et celle des étages supérieurs étant de 50 cm, un réseau d'assemblages en biseau configuré pour être adopté entre les bacs sol eau (2) supérieur et inférieur, et la distance entre eux étant d'environ 3 à 3,5 mètres, la hauteur totale de la structure de châssis étant de 10 à 15 cm ; de 50 à 80 mètres derrière eux, dans la direction du vent, se trouvent des châssis de structure tridimensionnelle monocorps à double rangée, dont le plan est perpendiculaire à la direction d'où souffle le vent le plus fort, la longueur du châssis étant de 40 à 50 mètres, et la hauteur étant d'environ 40 mètres, les montants verticaux étant construits en tant que châteaux d'eau et tour de génération d'énergie éolienne pour abriter un système de génération d'énergie éolienne (39), l'électricité produite étant utilisée afin de pomper et de stocker de l'eau, des sources d'eau étant disponibles par le creusement de puits et le pompage d'eau.

8. Une construction tridimensionnelle pour plantation pour une végétation selon la revendication 1, le stockage d'eau tridimensionnel étant **caractérisé par** :
les montants verticaux (1) configurés pour être élargis en diamètre afin d'être construits en tant que montants verticaux creux pour stocker de l'eau à l'intérieur,
le château d'eau vertical (44) configuré pour être divisé tous les 3 à 5 étages des cadres de végétation (46), sur chaque section duquel des conduites de prise d'eau (35) sont installées, et des sorties d'échappement d'air étant percées sur le dessus, des conduites de sortie d'eau (11) installées au bas, ou
la poutre horizontale (23) construite en bacs en forme de U (48) en haut du châssis, et des conduites de prise d'eau (35) installées sur le dessus et des conduites de sortie d'eau (11) installées au bas.

9. Une construction tridimensionnelle pour plantation pour une végétation selon la revendication 1, **caractérisée par** :
tous les châssis tridimensionnels (46) ayant une hauteur de 5 à 10 mètres supérieure à la maison support (10) ou aux autres bâtiments ; si un quelconque côté de la maison ou du bâtiment n'a pas de fenêtre, ou n'a pas besoin de lumière solaire directe, aucun volet basculant de végétation n'est requis de ce côté.
